# EUROPÄISCHE PATENTSCHRIFT

(11) **EP 3 567 011 B1**
(45) Veröffentlichungstag und Bekanntmachung des Hinweises auf die Patenterteilung: **19.10.2022**
(21) Anmeldenummer: 19173591.9
(22) Anmeldetag: 09.05.2019
(51) Int. Cl.: C02F 1/50, C02F 101/10

(54) **MITTEL ZUR VERHINDERUNG DER ENTSTEHUNG VON GERUCHS- UND KORROSIONSBILDENDEN EIGENSCHAFTEN BEI DER ABWASSERBEHANDLUNG**
AGENT FOR PREVENTING THE DEVELOPMENT OF ODOUR AND CORROSION-FORMING PROPERTIES IN WASTEWATER TREATMENT
MOYENS PERMETTANT D'EMPÊCHER L'APPARITION DES PROPRIÉTÉS ODORANTES ET CORROSIVES LORS DU TRAITEMENT DES EAUX USÉES

(30) Priorität: 11.05.2018 AT 503962018
(43) Veröffentlichungstag der Anmeldung: 13.11.2019
(73) Patentinhaber: Kubinger, Ulrich, 4675 Weibern (AT)
(72) Erfinder: Kubinger, Ulrich, 4675 Weibern (AT)
(74) Vertreter: Hübscher & Partner Patentanwälte GmbH

(56) Entgegenhaltungen:
- EP-A1- 2 808 306
- CN-A- 105 624 093
- DE-A1-102012 024 111

## Beschreibung

Die Erfindung bezieht sich auf ein Mittel gemäß Anspruch 1 zur Verhinderung der Entstehung von geruchs- und korrosionsbildenden Eigenschaften bei der Abwasserbehandlung auf Basis von Eisenchlorid und/oder Eisensulfat sowie Molybdänsalz.

In Abwässern und Klärschlämmen tragen mikrobielle Stoffwechselvorgänge, insbesondere die enzymatische Sulfatreduktion schwefelmetabolisierender Bakterien, mit den dabei entstehenden Schwefelverbindungen zu einer unerwünschten Geruchsbildung und Korrosion von Abwassersystemen bei.

Üblicherweise treten geruchsbildende Stoffe dort auf, wo sehr lange Verweilzeiten und ein hohes Zehrpotential an Sauerstoff des zu reinigenden Abwassers vorliegen. In dieser Zeit wird dann die organische Schmutzfracht in Gegenwart von Schwefelverbindungen durch schwefelmetabolisierende Mikroorganismen abgebaut, wobei unerwünschter, giftiger Schwefelwasserstoff sowie geruchsintensive Stoffe auftreten. Dadurch kommt es in weiterer Folge zur Geruchsbelästigung und Korrosion, weil sich aufgrund von Rücklösung des Schwefelwasserstoffes im wässrigen Milieu biogene Schwefelsäure bildet.

Aus dem Stand der Technik ist es bekannt, zur symptomatischen Geruchsbekämpfung bzw. Korrosionsverhinderung schwefelhaltige Zwischenmetabolite, wie beispielsweise Sulfide, mit Eisennitrat-haltigen Mitteln zu fällen. Nachteilig ist allerdings, dass eine gezielte Hemmung der schwefelmetabolisierenden Bakterien dabei nicht erreicht wird, sodass für eine kontrollierte Geruchs- und Korrosionsverhinderung die immer wieder neu enstehenden Schwefelverbindungen messtechnisch erfasst und das Eisennitrat-haltige Mittel in hohen Mengen zudosiert werden müssen. Überdies ist die Lagerung und Verwendung von Eisennitrat insofern problematisch, als dass sich bereits bei Temperaturen zwischen 25° - 30°C gesundheitsschädliche nitrose Gase bilden können.

Darüber hinaus ist es bekannt, dass die komplexbildenden Eigenschaften von Carbonsäuren wie beispielsweise Zitronensäure eine Sekundärverschmutzung des Abwassers bewirken und eine effiziente Fällung von gelösten Schadstoffen aus dem Abwasser verhindern, weshalb Carbonsäuren in der Abwasserbehandlung bisher vermieden worden sind. DE102012024111, EP2808306 und CN105624093 beziehen sich auf Mittel für Abwasserbehandlung, die Eisensalze, Calciumsalze und Carbonsäuren umfassen.

Der Erfindung liegt somit die Aufgabe zugrunde, ein Mittel zur Verhinderung der Entstehung von geruchs- und korrosionsbildenden Eigenschaften bei der Abwasserbehandlung anzugeben, das dem zu behandelnden Abwasser in geringer Dosiermenge ohne zusätzlicher Mess- und Regeltechnik zugesetzt werden kann und dabei eine erhöhte Lagerbeständigkeit aufweist.

Die Erfindung löst die gestellte Aufgabe dadurch, dass das Eisenchlorid und/oder Eisensulfat einen Katalysator bildet, der mit einem Enzyminhibitor auf Basis eines Molybdännitrats, Molybdänchlorids oder Molybdänsulfats zur biologischen Hemmung schwefelmetabolisierender Mikroorganismen zusammenwirkt und dass das Mittel eine Carbonsäure zur Milieuverschiebung in den anoxischen Bereich umfasst.

Der Erfindung liegt die Erkenntnis zugrunde, dass durch Inhibition des für die Stoffwechselvorgänge von schwefelmetabolisierenden Mikroorganismen essentiellen Enzyms EC2.7.7.4 - Sulfat-adenylyltransferase mit Molybdän die Entstehung von geruchsbildenden bzw. korrosiven Schwefelverbindungen verhindert werden kann. Das Kation, nämlich Molybdän, agiert hierbei in ionischer Form als Inhibitor, wodurch gezielt die Zytoplasmamembrane der schwefelmetabolisierenden Mikroorganismen belegt wird und somit keine Stoffwechselvorgänge stattfinden. Um günstige Bedingungen für die Enzyminhibition zu schaffen, muss ein anoxisches Milieu im Abwasser vorliegen. Dabei werden die unter anaeroben Bedingungen vorherrschenden schwefelmetabolisierenden Mikroorganismen unter anoxischen Bedingungen und in Gegenwart von Nitraten als gebundene Sauerstoffquelle durch stickstoffmetabolisierende Mikroorganismen zurückgedrängt. Durch die Verschiebung des biologischen Abbaugefüges hin zu stickstoffbasierten Vorgängen wird zudem die Bildung von Schwefelwasserstoff zusätzlich unterbunden, wodurch die Entstehung unangenehm riechender Stoffe auf Schwefelbasis, Aminbasis oder Thiolbasis verhindert wird. Die Entstehung nitroser Gase wird insofern verhindert, als dass die im anoxischen Milieu dominierenden stickstoffmetabolisierenden Bakterien im Zuge der Denitrifikation die vorhandenen Nitrate vollständig in molekularen Stickstoff umwandeln. Um deshalb die Verschiebung in ein anoxische Milieu zu begünstigen, weist das erfindungsgemäße Mittel eine Carbonsäure, beispielsweise Zitronensäure, Ameisensäure, Essigsäure, Propionsäure oder Adipinsäure, auf. Um im anoxischen Milieu eine Inhibitionswirkung zu erzielen, muss Molybdän in ionischer Form verfügbar sein. Eisenchlorid-Verbindungen und Eisensulfat-Verbindungen sind grundsätzlich als Fällungsmittel bekannt, sodass dadurch bereits etwaige zum Dosierzeitpunkt vorliegende geruchsbildende bzw. korrosive Schwefelverbindungen chemisch abgebunden und in fester Form ausgefällt werden, wodurch diese in weiterer Folge chemisch inaktiv sind. Es hat sich jedoch überraschenderweise gezeigt, dass Eisenchlorid- oder Eisensulfatverbindungen im anoxischen Milieu auch eine katalytische Wirkung zur Ausbildung von

Molybdän-Ionen des Molybdänsalzes aufweist. Da sowohl Molybdän- als auch Eisenverbindungen unabhängig voneinander in ionischer Form in stabiler Lösung gehalten und gegenseitig interferierende Reaktionen zufolge des im erfindungsgemäßen Mittel vorliegenden Redoxpotentials verhindert werden müssen, wirkt die Carbonsäure in geringen Dosen zusätzlich als Stabilisator.

Es hat sich herausgestellt, dass bereits bei geringen Massenanteilen einer Carbonsäurelösung von 0,1 - 2 % an dem erfindungsgemäßen Mittel in Kombination mit einem Massenanteil von 60 - 80 % einer Enzyminhibitorlösung sowie 20 - 40 % einer Katalysatorlösung die durch bakterielle Vergärung entstehenden Abbauprodukte der Carbonsäure die Verschiebung in ein anoxisches Milieu begünstigen, ohne dass es dabei zu einer unerwünschten Komplexbildung kommt.

Durch die sich erfindungsgemäß einstellenden Synergieeffekte der Enzyminhibition, der Verschiebung in ein anoxisches Milieu mit stickstoffmetabolisierenden Mikroorganismen als dominierende Spezies sowie dem Ausfällen zum Dosierzeitpunkt bereits existierender Schwefelverbindungen durch das katalytisch wirkende Eisenchlorid muss die Zugabe des Mittels nicht exakt stöchiometrisch erfolgen, sodass nicht auf zusätzliche Mess-und Regeltechnik sowie aufwendige konstruktive Maßnahmen zurückgegriffen werden muss. Um die zuvor beschriebenen Wirkungen zu erzielen, ist überdies nur eine geringe Dosiermenge, insbesondere zwischen 1 und 10000 ppm, des erfindungsgemäßen Mittels erforderlich.

### Ausführungsbeispiel: (nicht erfindungsgemäß)

Ein Mittel zur Verhinderung der Entstehung von geruchs- und korrosionsbildenden Eigenschaften bei der Abwasserbehandlung weist 75 Gew. % einer Calciumsalz-Lösung, 24 Gew. % einer 40 %-igen Eisen-dreichlorid-Lösung und 1 Gew. % einer 50 %-igen Zitronensäure-Lösung auf.

Eine weitere Ausführungsform eines Mittels zur Verhinderung der Entstehung von geruchs- und korrosionsbildenden Eigenschaften bei der Abwasserbehandlung weist 60 Gew. % einer Calciumsalz-Lösung, 28 Gew. % einer 40 %-igen Eisen-dreichlorid-Lösung und 2 Gew. % einer 50 %-igen Zitronensäure-Lösung auf.

Es wurde festgestellt, dass das erfindungsgemäße Mittels eine gute biologische Hemmung der in Abwässern bzw. Schlämmen vorkommenden Mikroorganismen, wie beispielsweise Thiotrix sp., Typ 021N sowie Beggiatoa sp., erzielt. Die Dosierung kann beispielsweise von einem Tank ausgehend in einen Kanal an einer entsprechend turbulenten Stelle erfolgen.

## Patentansprüche

1. Mittel zur Verhinderung der Entstehung von geruchs- und korrosionsbildenden Eigenschaften bei der Abwasserbehandlung auf Basis von Eisenchlorid und/oder Eisensulfat sowie Molybdänsalz, wobei das Molybdänsalz ein Molybdännitrat, Molybdänchlorid oder ein Molybdänsulfat ist, welches einen Enzyminhibitor derart bildet, dass das Kation, nämlich Molybdän, in ionischer Form als Inhibitor agiert, wodurch gezielt die Zytoplasmamembrane schwefelmetabolisierender Mikroorganismen belegt werden, wobei das Eisenchlorid und/oder Eisensulfat einen Katalysator zur Ausbildung von Molybdän-Ionen des Molybdänsalzes bildet, der mit dem Enzyminhibitor zur biologischen Hemmung schwefelmetabolisierender Mikroorganismen derart zusammenwirkt, dass einerseits die Entstehung von geruchsbildenden bzw. korrosiven Schwefelverbindungen verhindert sowie andererseits bereits zum Dosierzeitpunkt geruchsbildende bzw. korrosive Schwefelverbindungen chemisch abgebunden und in fester Form ausgefällt werden, und wobei das Mittel eine Carbonsäure zur Milieuverschiebung in den anoxischen Bereich umfasst.

2. Mittel nach Anspruch 1, **gekennzeichnet durch** einen Massenanteil von 60 - 80 % einer Enzyminhibitorlösung, 20 - 40 % einer Katalysatorlösung und 0,1 - 2 % einer Carbonsäurelösung.

3. Verwendung eines Mittels nach Anspruch 1 oder 2 für die Abwasserbehandlung, **dadurch gekennzeichnet, dass** die Dosiermenge zwischen 1 und 10000 ppm beträgt.

## Claims

1. Agent for preventing the formation of odour-forming and corrosion-forming properties in the treatment of waste water based on iron chloride and/or iron sulphate as well as molybdenum salt, wherein the molybdenum salt is a molybdenum nitrate, molybdenum chloride or a molybdenum sulphate which forms an enzyme inhibitor such that the cation, namely molybdenum, in ionic form acts as an inhibitor, whereby the cytoplasmic membranes of sulphur-metabolising microorganisms are selectively occupied, wherein the iron chloride and/or iron sulphate forms a catalyst in order to form molybdenum ions of the molybdenum salt which cooperates with the enzyme inhibitor for the biological inhibition of sulphur-metabolising microorganisms such that, on the one hand, the formation of odour-forming or corrosive sulphur compounds is prevented and, on the other hand, odour-forming or corrosive sulphur compounds are chemically bonded and precipitated in solid form even at the time of metering, and wherein the agent comprises a carboxylic acid for the shifting of the environment into the anoxic zone.

2. Agent as claimed in claim 1, **characterised by** a mass proportion of 60-80% of an enzyme inhibitor solution, 20-40% of a catalyst solution and 0.1-2% of a carboxylic acid solution.

3. Use of an agent as claimed in claim 1 or 2 for the treatment of waste water, **characterised in that** the metering quantity is between 1 and 10000 ppm.

## Revendications

1. Composition pour empêcher l'apparition de propriétés odorantes et corrosives lors du traitement des eaux usées à base de chlorure de fer et/ou de sulfate de fer ainsi que de sel de molybdène, dans laquelle le sel de molybdène est un nitrate de molybdène, un chlorure de molybdène ou sulfate de molybdène qui constitue un inhibiteur enzymatique de telle sorte que le cation, à savoir le molybdène, agit comme inhibiteur ou forme ionique, de sorte que les membranes cytoplasmiques de microorganismes métabolisant le soufre sont occupées de façon ciblée, et dans laquelle le chlorure de fer et/ou le sulfate de fer constituent un catalyseur pour la formation d'ions de molybdène du sel de molybdène qui interagit avec l'inhibiteur enzymatique pour inhiber biologiquement les microorganisme métabolisant le soufre de telle sorte que, d'une part, l'apparition de liaisons soufrées odorantes ou corrosives est empêchée et que, d'autre part, les liaisons soufrées odorantes ou corrosives existant déjà au moment du dosage sont détruites chimiquement et précipitées sous forme solide, cette composition étant un acide carboxylique pour décaler le milieu dans la zone anoxique.

2. Composition selon la revendication 1, **caractérisée par** une proportion en poids de 60 à 80% de solution d'inhibiteur enzymatique, de 20 à 40% d'une solution de catalyseur et de 0,1 à 2% d'une solution d'acide carboxylique.

3. Utilisation d'une composition selon la revendication 1 ou 2 pour le traitement des eaux usées, **caractérisée en ce que** la quantité de dosage est de 1 à 10000 ppm.
